# EUROPEAN PATENT SPECIFICATION

(11) **EP 4 006 507 B1**
(45) Date of publication and mention of the grant of the patent: **11.06.2025**
(21) Application number: 20210113.5
(22) Date of filing: 26.11.2020
(51) Int. Cl.: G01J 1/32, G01J 3/10, G01J 3/42, G01J 3/46, G01J 3/52

(54) **OPTICAL DEVICE FOR A COLORIMETER SYSTEM**
OPTISCHE VORRICHTUNG FÜR FARBMESSSYSTEME
DISPOSITIF OPTIQUE POUR UN SYSTÈME DU COLORIMÈTRE

(43) Date of publication of application: 01.06.2022
(73) Proprietor: Ayxon-Dynamics GmbH, 12619 Berlin (DE)
(72) Inventor: RINDT, Daniel, Berlin (DE)
(74) Representative: Eisenführ Speiser

(56) References cited:
- EP-A2- 0 834 726
- US-A- 5 159 185
- US-A- 5 471 052
- US-A1- 2003 058 450

## Description

The invention is directed to an optical device, to a colorimeter system, to a respective method for operating an optical device and a colorimeter system and to a computer program.

Document WO 95/03537 is directed to a titrating apparatus that comprises radiant energy means. The device includes means for modulating an amplitude of an intensity of the radiant energy. An adjacent solution within a sample beaker having a color indicator dissolved therein partially absorbs the radiant energy. A radiant energy detector produces a transmitted signal. Filtering means filters the transmitted signal. The filtering means produces a filtered transmitted energy signal representative of only tie amount of radiant energy transmitted through the solution from die radiant energy source, free of other sources of radiant energy. The colorimetric titrator also includes means for constructing a titration curve, means for computing the first derivative of the titration curve, means for computing the second derivative of the titration curve, control means for controlling titrant addition means in response to the first derivative of the titration curve, and means for calling the endpoint of the titration by using the second derivative.

Prior art devices are disclosed in documents US5159185, EP0834726, and US5471052.

It would be beneficial to improve the accuracy of a colorimeter system without an increase of production costs.

According to a first aspect of the present invention, an optical device for determining an optical parameter of a test sample is defined in claim 1. The optical device can be advantageously used in a colorimeter system, as it will be explained below with respect to a second aspect of the invention.

The optical device of the first aspect comprises a lighting unit that includes at least one light emitter that is configured to emit light of a predetermined spectral range with variable light intensity. The lighting unit also comprises a light controller that is configured to receive control parameters and to control the light intensity of the at least one light emitter in dependence of the received control parameters.

The optical device also comprises a light detecting unit that is arranged and configured to detect impinging light from the lighting unit and to provide an electrical current with a current amount that depends on the intensity of the detected impinging light.

Further, the optical device includes a converting unit that is connected to the light detecting unit and configured to provide a digital value in dependence of the current amount. The converting unit is connected to a processing unit, which is also connected to the lighting unit and configured to control a performance of measurement cycles of the optical device. Each measurement cycle includes at least one reference measurement for measuring a reference sample and one sample measurement for measuring the test sample.

When the optical device is performing the reference measurement, the processing unit is configured to receive reference digital values from the converting unit, and to determine and provide, to the light controller, target control parameters such that the received reference digital values reaches a predetermined target digital value.

Moreover, when performing the sample measurement, the processing unit is further configured, to provide to the light controller, the target control parameters determined when performing the reference measurement, to receive sample digital values and to provide an output signal indicative thereof.

A measurement cycle is, therefore, divided into a reference measurement and a sample measurement. During the reference measurement, light from the lighting unit typically interacts with the reference sample and reaches the light detector, which converts the impinging light into an electrical current. The converting unit received the electrical current as an input and outputs a digital value that depends on the current amount currently received. The processing unit provides control parameters to the lighting unit for controlling the intensity of the emitted light, thus creating a feedback loop. The lighting unit is controlled until the received digital value is the predetermined target digital value. The control parameter that has resulted in the light emitter emitting a light intensity that has caused the converting unit to output a digital value that corresponds to the predetermined target digital value is referred to as target control parameter. The value is then typically stored for its use during the performance of the sample measurement.

During the sample measurement, the reference sample is typically substituted by the test sample and the processing unit provides the target control parameter to the controller unit for controlling the light intensity of the light emitter, so that the intensity of the emitted light is substantially similar to that emitted during the reference measurement. The digital values provided in response to the detected light are referred to as sample digital values. In order to determine an optical parameter of the test sample, such as, for example, transmission, absorption or reflection, the sample digital value is compared with the predetermined target digital value. The optical parameter that is to be determined depends on a specific arrangement of the lighting unit, the light detecting unit and the reference and test samples.

The optical device of the first aspect of the invention is therefore advantageously configured to perform the sample measuring by driving the lighting unit with the target control parameters, i.e. with those control parameters under which the light emitter provides a light intensity which result in the converting unit providing the predetermined target digital value in response to the impinging light during the reference measurement. This way of operation mitigates the effects of light intensity fluctuations, which are typical for some light sources, especially in optical devices with low production costs, and which are detrimental to the overall accuracy of the device.

In the following, embodiments of the optical device of the first aspect of the present invention will be described.

In an embodiment, the output signal is directly indicative of the sample digital values, whereas in an another embodiment, the output signal is alternatively or additionally indicative of a difference between the predetermined target digital value and the received sample digital values. Optionally, the processing unit is further configured to encrypt the sample digital values and/or the difference between the predetermined target digital value and the received sample digital values before providing an output signal indicative thereof.

In a preferred embodiment, the optical device comprises an output interface for providing output signals and an input interface for receiving input signals. In this embodiment, the processing unit, when performing the reference measurement, and after having determined and provided the target control parameters, is configured to provide, via the output interface, a sample exchange signal indicative of a request to remove the reference sample and to await input, via the input interface, of a test sample input signal indicative of a provision of the test sample.

Also, when performing the sample measurement, the processing unit is configured to provide the target control parameters in response to a reception of the test sample input signal.

In the invention, when the optical device is performing the reference measurement, and after the received reference digital value has reached the predetermined target digital value, the processing unit is further configured to monitor for a predetermined time span the received reference digital values and to determine a variation trend of the reference digital values received during the predetermined time span according to a predetermined evaluation algorithm. Also, when the optical device is performing the sample measurement, the processing unit is further configured to determine a corrected digital value, based on the received sample digital values and the variation trend. The output signal is then indicative of the corrected digital value. The determination of the variation trend is performed, in an embodiment, before the provision of the sample exchange signal.

The variation trend is determined to evaluate possible fluctuations of the light intensity emitted by the lighting unit in dependence of time, due to, for example, changes in temperature conditions of the light emitter or to aging. The predetermined time span is, in a particular embodiment 30 seconds. In other embodiments the predetermined time span can range from 1 second to 10 minutes. In a particular embodiment, the predetermined time span changes as a function of how much time the optical device has been operating or on how many measurements cycles have been performed since the optical device has last been turned on.

In an embodiment, the variation trend is performed by fitting the reference digital values received during the predetermined time span using a predetermined mathematical function, such as, but not limited to a linear function, a polynomic function, an exponential function, a logarithmic function or any other kind of mathematical function that can be used to fit a set of data. Optionally, the processing unit is further configured to ascertain a time amount indicative of a time window between extraction of the reference sample and provision of the test sample and to determine, using the variation trend and the ascertained time amount, an expected variation of the digital values provided by the converting unit. This allows for a correction of measurement errors caused by fluctuations of the light intensity during the time window and that would be otherwise attributed to changes in the test sample, thereby further increasing the accuracy of the optical device.

In another embodiment, the processing unit is configured to stop a measurement cycle if a time between the extraction of the reference sample and introduction of the test sample exceeds a predetermined time threshold amount. The time threshold amount is, in an embodiment, a fixed time amount. In an alternative embodiment, the time threshold amount is determined based on the variation trend, for example on a quality of the fit of the mathematical function to the received data. When a cycle measurement is stopped, the processing unit optionally provided an output signal indicative of a request to re-start the measurement cycle.

In another embodiment, which may include any combination of the technical features described above, the processing unit further comprises a wireless communication unit configured to provide the output signal as a wireless communication signal in accordance with a predetermined wireless communication protocol, such as, but not limited to, Wi-Fi, Bluetooth, Bluetooth Low Energy (BLE), Thread, or any other suitable wireless communication protocol know by the person skilled in the art. Alternatively, or additionally, in another embodiment, the processing unit comprises a wired communication unit configured to provide the output signal via a wired connection. Alternatively, or additionally, the processing unit comprises a display unit configured to visually output an output value indicative of the sample digital value, the corrected digital value or of the optical parameter. In yet another embodiment, which may optionally include any of the technical features described above, the lighting unit comprises a plurality of light emitters, each configured to emit light at a respective different spectral range.

In an exemplary embodiment comprising a plurality of light emitters, the processing unit is configured to operate each of the plurality of light emitters in sequence when performing the reference measurement and when performing the sample measurement, such that at a given point in time only one of the light emitters emits light.

For instance, in an embodiment, when performing the reference measurement for a respective light emitter, the processing unit is configured to receive reference digital values associated to the respective light emitter; and to determine and provide, to the light controller, respective target control parameters for controlling the respective light emitter, such that a received reference digital value associated to the respective light emitter reaches a respective predetermined target digital value. Once the target control parameter is determined, the processing unit monitors for a predetermined timespan the received reference digital values obtained while controlling the light emitter with the target control parameter and determines the corresponding variation trend before performing the reference measurement with another one of the light emitters. Alternatively, the processing unit can be configured to determine the variation trend while the subsequent reference measurement is being performed. Once the reference measurement is done for all or for a predetermined subset of the light emitters, the processing unit is configured to start the sample measuring. In an embodiment, the sample exchange signal is provided and the sample measurement starts upon reception of the test sample input signal.

Further, when performing the sample measurement for the respective light emitter, the processing unit is configured to provide the respective target control parameters determined when performing the reference measurement for the respective light emitter, and to receive sample digital values associated to the respective light emitter and to provide a respective output signal indicative thereof. As in the case of the reference measurements, the sample measurement is performed for all or for the same predetermined subset of light emitters. The choice of a subset of light emitters may depend on the parameterto determine and/or on the sample under study.

In particular, in a preferred embodiment, the lighting unit comprises at least one light emitting diode (LED), and preferably three light emitting diodes with respective different spectral ranges. Additionally a white LED and a filtering unit for filtering a plurality of wavelength regions can be implemented in a particular embodiment. In a preferred embodiment, the lighting unit comprises a red LED, for example with an emission spectrum with wavelengths values centered at around 623 nm, a green LED, for example with an emission spectrum with wavelengths values centered at around 530 nm, and a blue LED, for example with an emission spectrum with wavelengths values centered at around 472 nm. The light intensity provided by standard commercially available low cost LED is typically not stable and depends on several factors such as operating current, temperature and aging. Therefore, the performance of the reference measurement, preferably also with the determination of the variation trend enables the use of LEDs as light emitters without a significant impact in the accuracy of the results.

In another embodiment, the processing unit is configured, upon being powered up, and for performing an initial calibration process, to receive reference digital values from the converting unit and to determine and provide, to the light controller, initial control parameters such that the received reference digital value reaches the predetermined target digital value. Typically, during a ramping up or warming up phase of the optical device, the light intensity provided by the light emitters is particularly unstable. In an embodiment, the warming up phase is configured to last approximately 20 to 50 seconds. However, other embodiments may have a warming up phase that lasts less than 20 seconds or more than 50 seconds. The initial calibration process is similar to the reference measurement but typically the light from the light emitter does not interact with the reference or with the test sample. This represents a first approximation to the desired illumination conditions, which will then be fine-tuned using the provided initial control parameters during the reference measurement. In an embodiment with a plurality of light emitters, the calibration phase is performed for each of the light emitters or for a predetermined subset thereof.

In a particular embodiment, which can be combined with any of the technical features described above, the light detector is a photodiode, in particular a broad spectrum photodiode, and also includes an amplifier, such as a transimpedance amplifier.

In another embodiment, which can be combined with any of the technical features described above, the converting unit is an analog-to-digital converter (ADC) unit, which can be also integrated in the processing unit. Preferably, the ADC is a 16 bit ADC. In other embodiments that require less resolution, the ADC is a 8 bit ADC. In other embodiments, ADC with a larger number of bits can be used.

For example, in an embodiment, the reference digital value is a single value. Alternatively, the reference digital value is a value range centered around a middle value. In a preferred embodiment that includes a 16-bit ADC, the reference digital value is 30.000, or alternatively a narrow value range centered around 30.000, such as 30.000 plus/minus 1%, 0.5% or 0.1%.

In an embodiment, there is a signal target digital value for each of the light emitters. Alternatively, in another embodiment, each of the light emitters can be controlled to provide a different light intensity, so that the target digital value for each light emitter may vary.

According to a second aspect of the present invention a colorimeter system for determining a concentration value of a substance in a solution, or test sample, is presented. The colorimeter system comprises an optical device according to the first aspect of the present invention or of any of its embodiments and thus shares its advantages.

The colorimeter system also comprises a testing chamber that is configured to receive a sample holder and a concentration determination unit that is configured to receive, from the optical device, the output signal indicative of the sample digital values or the corrected digital values, to ascertain the predetermined target digital value, to ascertain reference values associated to at least one optical parameter of at least one substance and to determine a concentration value of the substance in the sample based on the received output signal, the predetermined target digital value and the ascertained reference values.

In an embodiment, the processing unit is also configured to provide to the concentration determination unit, the predetermined target digital values. In another embodiment, the predetermined target digital values are ascertained from a storage unit where they are stores.

In a particular embodiment wherein the optical device includes a wireless communication unit, the concentration determination unit comprises a corresponding wireless communication unit that is configured to receive from the optical device the wireless communication signal in accordance with the predetermined wireless communication protocol, such as, but not limited to, Wi-Fi, Bluetooth, Bluetooth Low Energy, Thread, etc.

Preferably, in an embodiment, the concentration determination unit is an application installed in a user device, such as a mobile phone, a tablet or a computer. The reference values associated to at least one optical parameter of at least one substance are, in an embodiment, stored in the user device and comprises a list of reference values. In an alternative embodiment, the user device is configured to ascertain the reference values from an external storage unit via a communication network, preferably a wireless communication network.

In yet another embodiment of the colorimeter system, the processing unit is configured to provide the sample digital values or the difference between the predetermined target digital value and the received sample digital values to the user device, via a first wireless communication protocol. The user device is then configured to provide the received data to a concentration determination unit that is external with respect to the user device. This communication is preferably performed using a wireless communication protocol that can be the same or a different wireless communication protocol than the first wireless communication protocol. The concentration determination unit receives the data, optionally decrypts the encrypted data, and determines the concentration of the substance. The concentration determination unit provides the result to the user device.

According to a third aspect of the present invention, a method for operating an optical device for determining an optical parameter of a sample according to claim 10 is presented.

The method of the third aspect thus shares any of the advantages of the optical device of the first aspect or of any of its embodiments.

According to a fourth aspect of the invention, a method for operating a colorimeter system for determining a concentration value of a substance in a solution is described. The method comprises:
- performing a method according to the third aspect or any of its embodiments. Further, the method comprises the steps of:
   before performing the reference measurement:
      - placing a reference sample in a testing chamber such that light from the emitted light is directed to the reference sample; and
   after performing the reference measurement and before performing the sample measurement:
      - placing a test sample comprising the reference sample and a predetermined amount of a testing reagent associated to the substance whose concentration is to be determined in the sample testing chamber.

The method further comprises, receiving the output signal, ascertaining the predetermined target digital value, ascertaining reference values associated to at least one optical parameter of at least one substance, determining a concentration value of the substance in the sample based on the received output signal, the predetermined target digital value and the ascertained reference values and providing a result signal indicative thereof.

The method of the fourth aspect shares the advantages of the colorimeter system of the second aspect and of any of its embodiments.

Typically the determination of the concentration of a given substance is determined using the sample digital values or the corrected digital values obtain when illuminating the reference sample and the test sample with a respective wavelength. Differences between the predetermined target digital value and the receive sample digital values or the corrected digital values are associated to an optical parameter at a given wavelength that is in turn associated with the concentration of the substance in the liquid sample. The plausibility of the measurement is increased by using more than one light emitter with different spectral characteristics. Further, by using more than one light emitter, it can be determined if there has been a problem during the measurement or if any of the samples (reference or test) are clear or turbid.

Typically, the reference sample is a liquid sample that includes a substance whose concentration is to be determined by the colorimeter. This is particularly advantageous in the field of water purity or of fish tanks or aquariums, for example.

In an example, a cuvette with the liquid sample is introduced in the sample holder of the colorimeter system. In order to minimize the effect of ambient light or other noise sources, the testing chamber is preferably closable so that only the light from the lighting unit can interact with the reference or the test sample during the respective measurement. The lighting unit and/or the light detecting unit can be arranged inside the chamber. Alternatively the lighting unit and/or the light detecting unit can be arranged outside the chamber, which then comprises a corresponding opening arranged and configured to let light pass through it.

A reference measurement is performed using the optical device of the colorimeter system and the target parameters for each of the light emitters is determined. Optionally a variation trend is determined.

The reference sample is then removed from the testing chamber, either by a user or by a sample exchanging unit, controlled by the processing unit. Typically this is performed after the provision of a sample exchange signal that is indicative of the fact that the reference measurement and optionally the determination of the variation trend are finished.

A predetermined amount of a reagent is added to the sample. This is the test sample, which is reintroduced into the testing chamber, preferably in the same position relative to the lighting unit and the light detecting unit. The light controller receives the target control parameters so that the light emitters are driven under the same conditions as during the reference measurement. However, at this stage, there is no feedback loop, since the value of the concentration of the substance in the test sample depends on the variation of the detected signal in relation to the predetermined target digital value.

The output values or the corrected output values that have been determined using the variation trend are provided to the concentration determination unit, which then uses these values, the predetermined target digital value and the ascertained reference values to determine the concentration of the substance as it is known by the person skilled in the art. The process of controlling the optical device or the colorimeter system can be controlled via a user interface of a user device. Preferably, the sample exchange signal is received at the user device and a request to remove the reference sample is displayed at the user device. After the test sample is provided to the testing chamber, the user can indicate this fact via the user interface and the user device provides the test sample input signal to the processing unit. Optionally, an embodiment of the colorimeter systems also comprises a sensing unit configured to determine whether a cuvette is placed in the testing chamber and/or if the testing chamber is properly closed.

In another embodiment, the processing unit is configured to stop a measurement cycle if a time between the extraction of the reference sample and introduction of the test sample, or if the time in which the test chamber remains in an open state, exceeds a predetermined time threshold amount. The time threshold amount is, in an embodiment, a fixed time amount. In an alternative embodiment, the time threshold amount is determined based on the variation trend, for example on a quality of the fit of the mathematical function to the received data.

According to a fifth aspect of the present invention, a computer program product according to claim 13 is described.

It shall be understood that the optical device claim 1, the colorimeter system of claim 8, the method for operating an optical device of claim 10, the method for operating a colorimeter system of claim 12 and the computer program of claim 13, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

In the following figures:
Fig. 1 shows a schematic block diagram of an exemplary colorimeter system comprising an optical device.
Fig. 2 shows a flow diagram of an embodiment of a method for operating an optical device.
Fig. 3 shows a flow diagram of an embodiment of a method for operating colorimeter system.

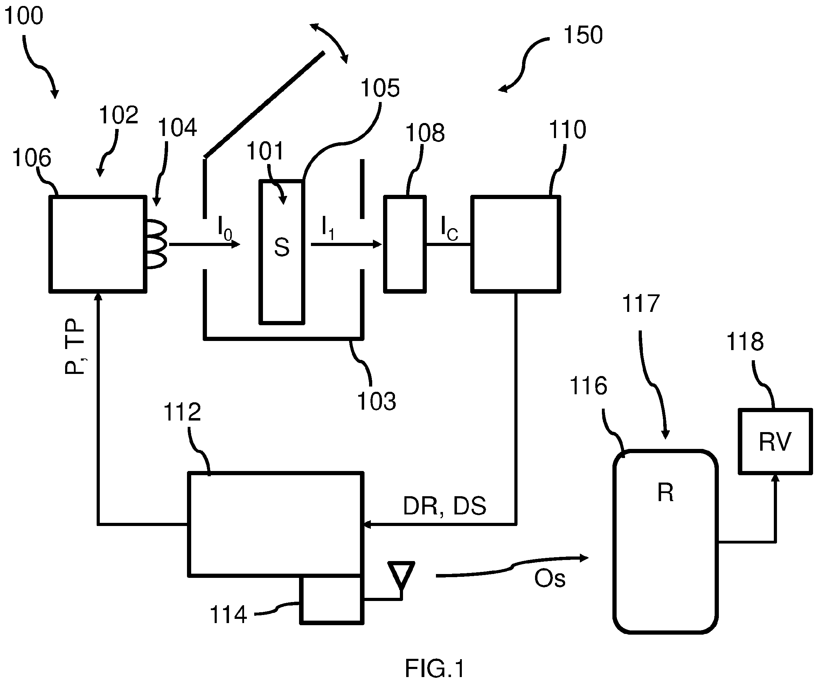

Figure 1 shows a schematic block diagram of an exemplary colorimeter system 150 which includes an exemplary optical device 100. The optical device 100 is configured and arranged to determine an optical parameter of a test sample 101, such as light absorption due to the presence of a particular concentration of a given substance in the test sample 101. The optical device 100 comprises a lighting unit 102, which in this example includes three LED 104, each configured to emit light of a predetermined spectral range with variable light intensity I₀. The lighting unit also includes a light controller 106 configured to receive control parameters P, TP and to control the light intensity I₀ in dependence of the received control parameters P, TP.

The lighting unit is arranged so that the light provided interacts with a sample 101 that is in a sample holder 105, which in this particular case is a cuvette, that is placed inside a testing chamber 103 of the colorimeter system 150. Part of the light is transmitted through the sample and reaches a light detecting unit 108, which in this particular case includes a photodetector and an amplifier, preferably a transimpedance amplifier. The light detecting unit 108 is arranged and configured to detect impinging light I₁ from the lighting unit 102 after having interacted with the sample 101, and to provide an electrical current with a current amount I_{c} that depends on the intensity I₁ of the impinging light I₁.

In the example shown in Fig. 1, the lighting unit and the light detecting unit are arranged outside the testing chamber, and the testing chamber comprises openings that allow the light from the lighting unit 102 to interact with the sample and to reach the light detecting unit 108. Also, the lighting unit 102 and the light detecting unit 108 of Fig. 1 are shown in a configuration suitable for determining an optical parameter associated to a transmission of light through the sample. In other colorimeter system, the lighting unit and the light detecting unit can be arranged to determine an optical parameter associated to a reflection or a scatter of light at the sample. In another colorimeter system, optionally, the lighting unit and/or the light detecting unit can be arranged inside the testing chamber.

The light detecting unit 108 is connected to a converting unit 110 that is configured to provide a digital values DR, DS in dependence of the current amount Ic received from the light detecting unit 108. In the present example, the converting unit is a 16-bit analogue-to-digital converter (ADC). In other exemplary colorimeter systems, the converter can be based on a different number of bits, such as a 4-bit, an 8-bit or a 32-bit converter, depending on the desired accuracy of the system. For example, the 16 bit-ADC is configured to provide a digital value between 0 and 32767, taking into account that one of the bits is indicative of the sign.

The optical device also comprises a processing unit 112 that is connected to the converting unit 110 and to the lighting unit 102. The processing unit 112 is configured to control a performance of measurement cycles each including one reference measurement for measuring a reference sample and one sample measurement for measuring the test sample. In particular, when performing the reference measurement, the processing unit is configured to receive reference digital values DR from the converting unit 110.

Based on the received reference digital values, the processing unit 112 is configured to determine and provide, to the light controller 106, control parameters P, in particular target control parameters TP such that the received reference digital value DR reaches a predetermined target digital value, thus building a feedback loop. In the exemplary optical device 100 of Fig. 1, the predetermined target digital value is 30.000. In other optical devices, this value can differ or even be different for each of the light emitters. Exemplarily, the current flowing through the LED is controlled by a transistor. The processing unit controls the working point of the transistor by providing control parameters until the received reference digital value is 30.000 or is within a predetermined range including the value 30.000, for example 29.970-30.030. The control parameter used to control the light controller so that the received reference digital value is the target digital values are referred to as target control parameters. In the case of having a plurality of light emitters involved in a given measurement cycle, the reference measurement is performed sequentially for all of the light emitters involved. The one or more target control parameters associated to a respective one of the light emitters are stored for use in the test measurement, as it will be explained further below.

According to the invention, after one of the target control parameters for controlling one of the light emitters has been determined, the processing unit is also configured to monitor for a predetermined time span the received reference digital values DR. During this time span, the feedback loop is interrupted so that the light intensity received at the light detecting unit is allowed to fluctuate, which might be caused by differences in temperature or aging processes, or any other effect that can cause the light emitted by the light emitter to change. Using the monitored digital values, the processing unit is also configured to determine a variation trend of the reference digital values DR received during the predetermined time span according to a predetermined evaluation algorithm. This is preferably performed for each of the light emitters of the lighting unit for which a corresponding target control parameter has been determined.

Once the target control parameters, and also the corresponding variations trends have been determined, the processing unit 112 is configured to provide, via an output interface, a sample exchange signal indicative of a request to remove the reference sample and to await input, via the input interface, of a test sample input signal indicative of a provision of the test sample. In an exemplary colorimeter system (not shown), the sample exchange signal is provided to an automatic sample exchange unit for exchanging the sample. In the colorimeter system 150, the sample is provided to a user, who is then aware of the fact that the reference measurement is finished and that the test sample 101 has to be prepared and introduced in the testing chamber 105 for the sample measurement. Further, when performing the sample measurement, optionally after having received the test sample input signal, the processing unit 112 is configured to provide to the light controller 106, the target control parameter TP determined when performing the reference measurement, for sequentially controlling those one or more light emitters involved in the measurement cycle. Then, a given light emitter is controlled in the same way as it was controlled for emitting a light intensity that resulted in the converting unit providing a reference digital value being equal to the predetermined target digital value. Under these operation conditions, the processing unit is configured to receive sample digital values DS and to provide an output signal indicative thereof. Since the light emitter is operated under the conditions which during the reference measurement resulted in a reference digital value equal to the predetermined target digital value, variations between the sample digital values received and the predetermined target digital value can be attributed solely to differences between the reference sample and the test sample, which can be used to determine an optical parameter associated to a concentration value of a substance in the test sample using the known principles of colorimetry, titration, volumetric analysis, etc.

Advantageously, the accuracy of this determination is increased by correcting the sample digital value using the variation trend determined during the predetermined time span, as explained before. The processing unit 112 is further configured to determine a corrected digital value, based on the received sample digital values DS and the variation trend. The output signal Os is indicative of the corrected digital value.

The processing unit 112 of the optical device 100 of Fig. 1 also comprises a wireless communication unit 114 that is configured to provide the output signal as a wireless communication signal Os in accordance with a predetermined wireless communication protocol, such as, but not limited to, Wi-Fi, Bluetooth, Bluetooth Low Energy, Thread, etc.

The colorimeter system 150 of Fig. 1 comprises, besides the optical device 100, the testing chamber 103 configured to receive a sample holder 105 with the test or the reference sample and a concentration determination unit 116. In some exemplary colorimeter systems, the concentration determination unit is integrated together with the optical device and the testing chamber forming a colorimeter device. In the case of the colorimeter system 150 of Fig. 1, the colorimeter is a distributed system where the concentration determination unit is a separate device, or part thereof. For instance, the concentration determination unit of the colorimeter system 150 is an application program or app in a user portable device 117, such as a mobile phone, a tablet or a computer.

The concentration determination 116 unit is configured to receive, from the processing unit 112 of the optical device 100, the output signal Os, in this case via the predetermined wireless communication protocol. Additionally, the concentration determination unit 116 is configured to ascertain the predetermined target digital value, either by receiving it from the processing unit or by looking up its value is a storage unit. The concentration determination unit 116 is also configured to ascertain reference values RV associated to at least one optical parameter of at least one substance S. The reference values can be stored in the user device 116 or can be stored externally in a storage unit 18. The user device is then advantageously configured to connect remotely, and preferably via a wireless communication protocol that is not necessarily the same communication protocol used to communicate with the processing unit, and to ascertain the reference values.

The reference values include, in a particular example, a list of concentration values of one or more substances as a function of a particular wavelength of one or more of the light emitters, of a used reagent and of the difference between the target digital value and the sample digital value or the corrected digital value. Typically a given substance is best investigated using a particular wavelength, for example that wavelength which is absorbed by the substance having reacted with a particularly suitable reagent.

The concentration determination unit 116 is configured to determine a concentration value of the substance in the sample based on the received output signal, the predetermined target digital value and the ascertained reference values and to provide a result signal R indicative thereof. In this particular example, the result signal is output via a display unit of the user device 117.

The user 117 device can be advantageously used as a control device for the optical device 100 and/or for the colorimeter system 150. A user can use the user device 117 to exchange control information and data with the colorimeter system and/or the optical device, for example to select a set of emitter lights of the available emitter lights to perform the measurement cycle, to receive the sample exchange signal, to provide the test sample input signal once the test sample is introduced in the test chamber, to select a particular target digital value for a measurement, etc.

In another exemplary colorimeter system (not shown), the concentration determination unit is external to the user device. The user device receives the output signal and forwards its data, i.e., at least the sample digital values or the difference between the predetermined target digital value and the received sample digital values to the concentration determination unit, preferably using an encrypted wireless communication channel. The encrypted communication channel preferably extends from the processing unit to the concentration determination unit. Thus, the determination of the concentration is not performed at the user device, but externally. The result is then provided to the user device for display.

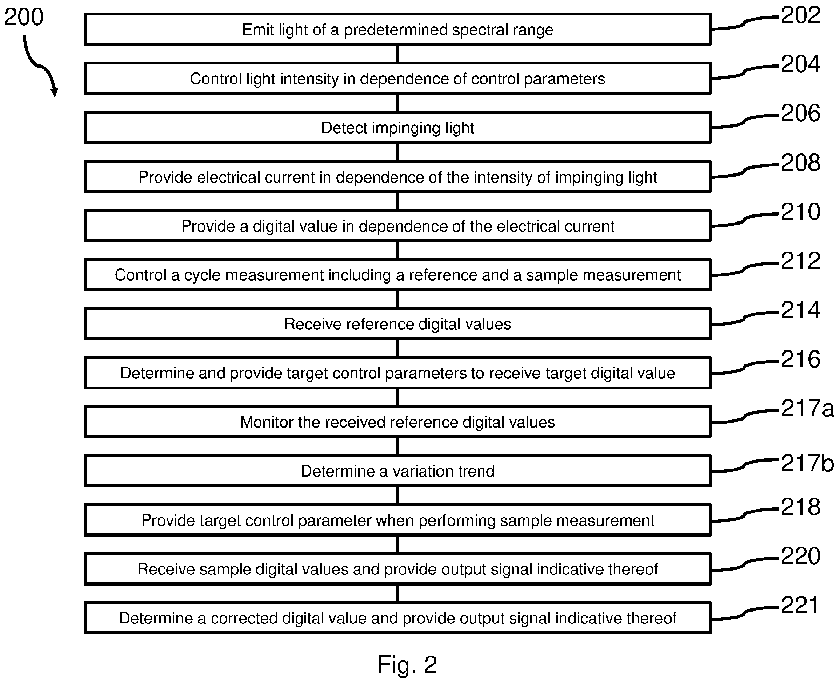

Fig. 2 shows a flow diagram of an embodiment of a method 200 for operating an optical device. The method 200 comprises, in a step 202 emitting light of a predetermined spectral range with variable light intensity. The method further comprises, in a step 204, controlling the light intensity in dependence of received control parameters. The method further comprises, in a step 206, detecting impinging light which corresponds to the emitted light after interaction with the sample. The method further comprises, in a step 208, providing an electrical current with a current amount that depends on the intensity of the impinging light. The method also comprises, in a step 210, providing a digital value in dependence of the provided electrical current. The method further comprises, in a step 212, controlling performance of a cycle measurement comprising a reference measurement and a sample measurement, wherein performing the reference measurement includes the steps of, receiving reference digital values, in a step 214, determining and providing, in s step 216, target control parameters such that the received reference digital value reaches a predetermined target digital value. Further, performing the sample measurement includes the steps of providing, in a step 218, the target control parameters determined when performing the reference measurement and, in a step 220, receiving sample digital values and providing an output signal indicative thereof.

According to the invention, the method 200, after the received reference digital value has reached the predetermined target digital value, comprises the steps of monitoring, in a step 217a for a predetermined time span the received reference digital values, and determining, in a step 217b, a variation trend of the reference digital values received during the predetermined time span according to a predetermined evaluation algorithm. When the optical device is performing the sample measurement, the method further includes the step 221 of determining a corrected digital value based on the received sample digital values and the variation trend and wherein the output signal is indicative of the corrected digital value.

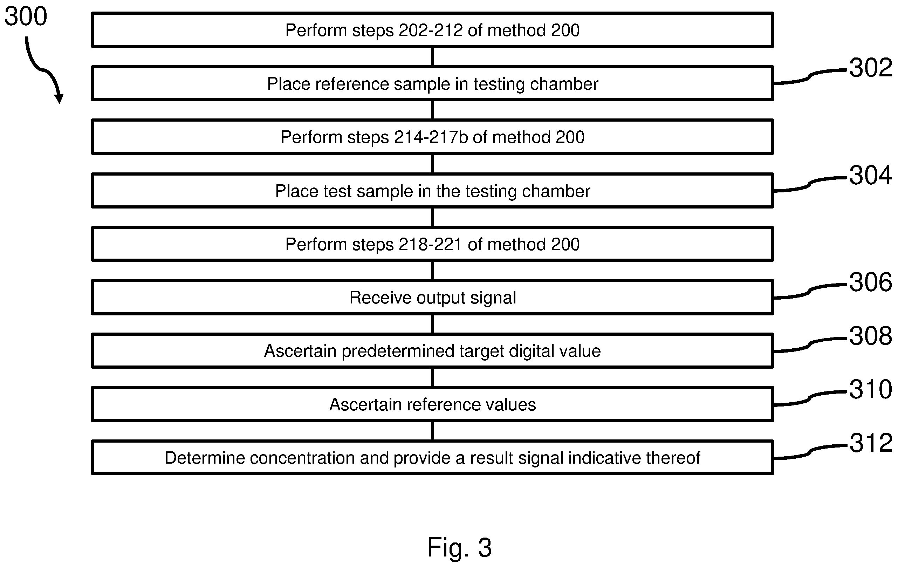

Fig. 3 shows a flow diagram of an embodiment of a method 300 for operating a colorimeter system. The method comprises performing the method 200 of Fig. 2, wherein the method 300 further comprises, before performing the reference measurement, placing, in a step 302, a reference sample in a testing chamber such that light from the emitted light is directed to the reference sample, and, after performing the reference measurement and before performing the sample measurement, placing, in a step 304, a test sample comprising the reference sample and a predetermined amount of a testing reagent associated to the substance whose concentration is to be determined in the sample testing chamber.

The method 300 further comprises, in a step 306, receiving the output signal Os, in a step 308, ascertaining the predetermined target digital value, in a step 310, ascertaining reference values RV associated to at least one optical parameter of at least one substance S; and, in a step 312, determining a concentration value of the substance in the sample based on the received output signal, the predetermined target digital value and the ascertained reference values and providing a result signal R indicative thereof

In an exemplary colorimeter system (not shown), the measurement cycle is carried out in the following manner. The optical device includes three LED with the spectral ranges 623 nm, 530 nm and 472 nm. The LEDs with the corresponding controllers are typically operated at about 2mW. The luminous flux emitted by the LED is influenced by several factors, such as operating current, temperature and aging. In order to keep their light intensity output at constant value, a control system consisting of analog and digital components are used. The control is done with a resolution of 16 bit. The light detecting unit is broadband and comprises a monolithic photodiode and a transimpedance amplifier. The analog output signal of the amplifier is digitized in an AD converter. The AD converter has a resolution of 16 bits but in this particular case only the measuring range from 0 to 30000 is used. The achievable accuracy is currently about +/- 10 digit. The sample is in a cuvette with a volume of approx. 4cm³. After switching on the colorimeter system a short calibration and warm-up phase is performed (approx. 40 seconds). Afterwards the system is ready for the reference measurement. During the reference measurement the sample is inserted in the testing chamber and is measured without test chemicals or reagents. For the reference measurement, the luminous flux or light intensity of the respective LED is adjusted in the spectral ranges as explained above. The adjustment is finished when the output of the AD converter reaches the predetermined target value, e.g., .a value of 30.000 for each of the LEDs is reached. Inserting and removing the cuvette causes an interruption of the LED control. To measure the test sample, the cuvette with the reference sample and the corresponding amount of reagent is inserted into the testing chamber. The LEDs are operated based on the target control parameters determined during the reference measurement. The digital measurement result are corrected on the basis of a variation trend determined during the reference measurement, as explained above. Further, the result, status information and possible errors of the device and/or system are transmitted via a wireless communication protocol, such as Bluetooth or BLE to the user device, e.g., a smartphone. Thus, an interaction between the smartphone and measuring device takes place.

In summary, the present invention is directed to an optical device for use in a colorimeter system and that comprises a controllable lighting unit, a light detection unit, a converting unit for providing digital values dependent on the intensity of the light impinging on the light detecting unit and a processing unit that controls a measurement cycle that includes a reference measurement and a sample measurement. During the reference measurement, the lighting unit is controlled by providing target control parameters so that the converting unit provides a predetermined target digital value. During the sample measurement, the lighting unit is controlled using the target control parameters, and sample digital values provided by the converting unit are used, together with the predetermined target digital value to determine an optical parameter of the test sample, thus increasing the accuracy of the optical device.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. An optical device (100) for determining an optical parameter of a test sample (101), the optical device (100) comprising:
- a lighting unit (102) comprising at least one light emitter (104) configured to emit light of a predetermined spectral range with variable light intensity (I0), and a light controller (106) configured to receive control parameters (P) and to control the light intensity (I0) in dependence of the received control parameters (P);
- a light detecting unit (108) arranged and configured to detect impinging light (I1) from the lighting unit (102) and to provide an electrical current with a current amount (Ic) that depends on the intensity (I1) of the impinging light;
- a converting unit (110) connected to the light detecting unit (108) and configured to provide digital values (DR, DS) in dependence of the current amount (Ic);
- a processing unit (112) connected to the converting unit (110) and to the lighting unit (102) and configured to control a performance of measurement cycles each including one reference measurement for measuring a reference sample and one sample measurement for measuring the test sample, and wherein, when performing the reference measurement, the processing unit is configured:
- to receive reference digital values (DR) from the converting unit (110), in dependence on the current amount (Ic) that depends on the light intensity (I1) of the light impinging on the light detecting unit (108);
- to determine and provide, to the light controller (106), target control parameters (TP) such that the received reference digital value (DR) reaches a predetermined target digital value;
- and wherein the processing unit (112) is further configured, when performing the sample measurement:
to provide, to the light controller (106), the target control parameters (TP) determined when performing the reference measurement; and
- to receive sample digital values (DS) from the converting unit (110), in dependence on the current amount (Ic) that depends on the light intensity (I1) of the light impinging on the light detecting unit (108); and to provide an output signal indicative thereof
**characterized in that**,
when the optical device (100) is performing the reference measurement, the processing unit (112) is further configured, after the received reference digital value (DR) has reached the predetermined target digital value,
- to monitor for a predetermined time span the received reference digital values (DR);
- to determine a variation trend of the reference digital values (DR) received during the predetermined time span according to a predetermined evaluation algorithm; and wherein
when the optical device (100) is performing the sample measurement, the processing unit (112) is further configured:
- to determine a corrected digital value, based on the received sample digital values (DS) and the variation trend, and wherein the output signal is indicative of the corrected digital value.

2. The optical device of claim 1, wherein the processing unit further comprises a wireless communication unit (114) configured to provide the output signal as a wireless communication signal (Os) in accordance with a predetermined wireless communication protocol.

3. The optical device of any of the preceding claims, wherein the lighting unit comprises a plurality of light emitters, each configured to emit light at a respective different spectral range.

4. The optical device of claim 3, wherein the processing unit is configured to operate each of the plurality of light emitters in sequence when performing the reference measurement and when performing the sample measurement, such that at a given point in time only one of the light emitters emits light.

5. The optical device of claim 3 or 4, wherein the processing unit is configured, when performing the reference measurement for a respective light emitter:
- to receive reference digital values associated to the respective light emitter; and
- to determine and provide, to the light controller, respective target control parameters for controlling the respective light emitter, such that a received reference digital value associated to the respective light emitter reaches a respective predetermined target digital value;
and wherein the processing unit is configured, when performing the sample measurement for the respective light emitter:
- to provide the respective target control parameters determined when performing the reference measurement for the respective light emitter;
- to receive sample digital values associated to the respective light emitter and to provide a respective output signal indicative thereof.

6. The optical device of any one of the preceding claims, wherein the lighting unit comprises at least one light emitting diode, in particular three light emitting diodes with respective spectral ranges in a red, a green and a blue spectral range.

7. The optical device of any of the preceding claims, wherein the processing unit is configured, upon being powered up, and for performing an initial calibration process:
- to receive reference digital values from the converting unit;
- to determine and provide, to the light controller, initial control parameters such that the received reference digital value reaches the predetermined target digital value.

8. A colorimeter system (150) for determining a concentration value of a substance (S) in a solution, the colorimeter system comprising:
- an optical device (100) according to any of the preceding claims 1 to 7,
- a testing chamber (103) configured to receive a sample holder (105); and
- a concentration determination unit (116) that is configured:
- to receive, from the processing unit (112) of the optical device (100), the output signal (Os);
- to ascertain the predetermined target digital value;
- to ascertain reference values (RV) associated to at least one optical parameter of at least one substance (S); and
- to determine a concentration value of the substance in the sample based on the received output signal, the predetermined target digital value and the ascertained reference values and to provide a result signal (R) indicative thereof.

9. The colorimeter system (150) of claim 8, wherein the optical device (100) is in accordance with claim 3, and the concentration determination unit comprises a wireless communication unit configured to receive from the optical device the wireless communication signal in accordance with the predetermined wireless communication protocol.

10. Method (200) for operating an optical device (100) according to any one of the claims 1 to 7 for determining an optical parameter of a sample, the method comprising:
- emitting light (202) of a predetermined spectral range with variable light intensity;
- controlling the light intensity (204) in dependence of received control parameters;
- detecting, at a light-detecting unit, impinging light (206) which corresponds to the emitted light after interaction with the sample;
- providing an electrical current (208) with a current amount that depends on the intensity of the impinging light,
- providing a digital value (210) in dependence of the provided electrical current,
- controlling performance of a cycle measurement (212) comprising a reference measurement and a sample measurement, wherein performing the reference measurement includes the steps of:
- receiving (214) reference digital values in dependence on the current amount that depends on the intensity of the impinging light on the light detecting unit;
- determining and providing (216) target control parameters such that the received reference digital value reaches a predetermined target digital value;
- and performing the sample measurement includes the steps of:
- providing the target control parameters (218) determined when performing the reference measurement; and
- receiving sample digital values in dependence on the current amount that depends on the light intensity of the light impinging on the light-detecting unit and providing (220) an output signal indicative thereof
**characterized in that** the method further comprises the steps of, when the optical device performs the reference measurement and after the received reference digital value has reached the predetermined target digital value:
- monitoring (217a) for a predetermined time span the received reference digital values;
- determining (217b) a variation trend of the reference digital values received during the predetermined time span according to a predetermined evaluation algorithm; and wherein when the optical device is performing the sample measurement, the method further includes the step of
- determining (221) a corrected digital value based on the received sample digital values and the variation trend and wherein the output signal is indicative of the corrected digital value.

11. The method of claim 10, further comprising the step of providing the output signal as a wireless communication signal in accordance with a predetermined wireless communication protocol.

12. A method (300) for operating a colorimeter system according to claim 8 or 9, the method comprising:
- performing the method (200) of any of the claims 10 or 11; wherein the method further comprises the steps of:
before performing the reference measurement:
- placing (302) a reference sample in a testing chamber such that light from the emitted light is directed to the reference sample; and
after performing the reference measurement and before performing the sample measurement:
- placing (304) a test sample comprising the reference sample and a predetermined amount of a testing reagent associated to the substance whose concentration is to be determined in the sample testing chamber, wherein the method (300) further comprises:
- receiving (306) the output signal (Os);
- ascertaining (308) the predetermined target digital value;
- ascertaining (310) reference values (RV) associated to at least one optical parameter of at least one substance (S); and
- determining (312) a concentration value of the substance in the sample based on the received output signal, the predetermined target digital value and the ascertained reference values and providing a result signal (R) indicative thereof.

13. A computer program comprising instructions which, when the program is executed by an optical device (100) according to any one of the claims 1 to 7, cause the optical device (100) to carry out the method of any of the claims 10 to 12.

## Patentansprüche

1. Optische Vorrichtung (100) zum Bestimmen eines optischen Parameters einer Testprobe (101), wobei die optische Vorrichtung (100) aufweist:
- eine Beleuchtungseinheit (102), die mindestens einen Lichtemitter (104), der ausgebildet ist, Licht eines vorbestimmten Spektralbereichs mit variabler Lichtintensität (I0) zu emittieren, und eine Lichtsteuerung (106), die ausgebildet ist, Steuerparameter (P) zu empfangen und die Lichtintensität (I0) in Abhängigkeit von den empfangenen Steuerparametern (P) zu steuern, aufweist;
- eine Lichterfassungseinheit (108), die angeordnet und ausgebildet ist, auftreffendes Licht (I1) von der Beleuchtungseinheit (102) zu erfassen und einen elektrischen Strom mit einer Strommenge (Ic) bereitzustellen, die von der Intensität (I1) des auftreffenden Lichts abhängt;
- eine Umwandlungseinheit (110), die mit der Lichterfassungseinheit (108) verbunden und ausgebildet ist, digitale Werte (DR, DS) in Abhängigkeit von der Strommenge (Ic) bereitzustellen,
- eine Verarbeitungseinheit (112), die mit der Umwandlungseinheit (110) und der Beleuchtungseinheit (102) verbunden und ausgebildet ist, die Durchführung von Messzyklen zu steuern, die jeweils eine Referenzmessung zum Messen einer Referenzprobe und eine Probenmessung zum Messen der Testprobe umfassen, und wobei die Verarbeitungseinheit bei der Durchführung der Referenzmessung ausgebildet ist:
- digitale Referenzwerte (DR) von der Umwandlungseinheit (110) in Abhängigkeit von der Strommenge (Ic) zu empfangen, die von der Lichtintensität (I1) des auf die Lichtdetektionseinheit (108) auftreffenden Lichts abhängt;
- Zielsteuerungsparameter (TP) zu bestimmen und an die Lichtsteuerung (106) zu liefern, so dass der empfangene digitale Referenzwert (DR) einen vorbestimmten digitalen Zielwert erreicht;
und wobei die Verarbeitungseinheit (112) weiterhin ausgebildet ist, bei der Durchführung der Probenmessung:
die Zielsteuerungsparameter (TP), die bei der Durchführung der Referenzmessung bestimmt wurden, an die Lichtsteuerung (106) zu liefern; und
- digitale Probenwerte (DS) von der Umwandlungseinheit (110) in Abhängigkeit von der Strommenge (Ic) zu empfangen, die von der Lichtintensität (I1) des auf die Lichterfassungseinheit (108) auftreffenden Lichts abhängt; und ein dafür kennzeichnendes Ausgangssignal bereitzustellen,
**dadurch gekennzeichnet, dass**
wenn die optische Vorrichtung (100) die Referenzmessung durchführt, die Verarbeitungseinheit (112) weiterhin so ausgebildet ist, dass sie, nachdem der empfangene digitale Referenzwert (DR) den vorbestimmten digitalen Zielwert erreicht hat,
- die empfangenen digitalen Referenzwerte (DR) über eine vorbestimmte Zeitspanne überwacht;
- einen Abweichungstrend der während der vorbestimmten Zeitspanne empfangenen digitalen Referenzwerte (DR) gemäß einem vorbestimmten Bewertungsalgorithmus bestimmt; und wobei
die Verarbeitungseinheit (112) weiterhin so ausgebildet ist, dass sie, wenn die optische Vorrichtung (100) die Probenmessung durchführt,
einen korrigierten digitalen Wert auf der Grundlage der empfangenen digitalen Probenwerte (DS) und des Abweichungstrends bestimmt, und wobei das Ausgangssignal den korrigierten digitalen Wert anzeigt.

2. Optische Vorrichtung nach Anspruch 1, wobei die Verarbeitungseinheit weiterhin eine drahtlose Kommunikationseinheit (114) aufweist, die ausgebildet ist, das Ausgangssignal als ein drahtloses Kommunikationssignal (Os) gemäß einem vorgegebenen drahtlosen Kommunikationsprotokoll bereitzustellen.

3. Optische Vorrichtung nach einem beliebigen der vorstehenden Ansprüche, wobei die Beleuchtungseinheit eine Vielzahl von Lichtemittern aufweist, die jeweils ausgebildet sind, Licht in einem jeweiligen unterschiedlichen Spektralbereich zu emittieren.

4. Optische Vorrichtung nach Anspruch 3, wobei die Verarbeitungseinheit ausgebildet ist, jeden der mehreren Lichtemitter nacheinander zu betreiben, wenn sie die Referenzmessung und die Probenmessung durchführt, so dass zu einem gegebenen Zeitpunkt nur einer der Lichtemitter Licht emittiert.

5. Optische Vorrichtung nach Anspruch 3 oder 4, wobei die Verarbeitungseinheit ausgebildet ist, bei der Durchführung der Referenzmessung für einen jeweiligen Lichtemitter:
- digitale Referenzwerte zu empfangen, die dem jeweiligen Lichtemitter zugeordnet sind; und
- jeweilige Zielsteuerungsparameter zur Steuerung des jeweiligen Lichtemitters zu bestimmen und an die Lichtsteuerung zu liefern, so dass ein empfangener digitaler Referenzwert, der dem jeweiligen Lichtemitter zugeordnet ist, einen jeweiligen vorbestimmten digitalen Zielwert erreicht;
und wobei die Verarbeitungseinheit ausgebildet ist, wenn sie die Probenmessung für den jeweiligen Lichtemitter durchführt:
- die jeweiligen Zielsteuerungsparameter bereitzustellen, die bei der Durchführung der Referenzmessung für den jeweiligen Lichtemitter bestimmt wurden;
- digitale Probenwerte zu empfangen, die dem jeweiligen Lichtemitter zugeordnet sind, und ein entsprechendes Ausgangssignal bereitzustellen, das dies anzeigt.

6. Optische Vorrichtung nach einem beliebigen der vorstehenden Ansprüche, wobei die Beleuchtungseinheit mindestens eine Leuchtdiode umfasst, insbesondere drei Leuchtdioden mit jeweiligen Spektralbereichen in einem roten, einem grünen und einem blauen Spektralbereich.

7. Optische Vorrichtung nach einem beliebigen der vorstehenden Ansprüche, wobei die Verarbeitungseinheit ausgebildet ist, beim Einschalten und zur Durchführung eines anfänglichen Kalibrierungsprozesses:
- digitale Referenzwerte von der Umwandlungseinheit zu empfangen;
- anfängliche Steuerparameter zu bestimmen und an die Lichtsteuerung bereitzustellen, so dass der empfangene digitale Referenzwert den vorgegebenen digitalen Zielwert erreicht.

8. Kolorimetersystem (150) zum Bestimmen eines Konzentrationswertes einer Substanz (S) in einer Lösung, wobei das Kolorimetersystem aufweist:
- eine optische Vorrichtung (100) gemäß einem der vorhergehenden Ansprüche 1 bis 7,
- eine Testkammer (103), die ausgebildet ist, einen Probenhalter (105) aufzunehmen; und
- eine Konzentrationsbestimmungseinheit (116), die ausgebildet ist:
- von der Verarbeitungseinheit (112) der optischen Vorrichtung (100) das Ausgangssignal (Os) zu empfangen;
- den vorbestimmten digitalen Zielwert zu ermitteln;
- Referenzwerte (RV) zu ermitteln, die mit mindestens einem optischen Parameter mindestens einer Substanz (S) verbunden sind; und
- einen Konzentrationswert der Substanz in der Probe auf der Grundlage des empfangenen Ausgangssignals, des vorbestimmten digitalen Zielwerts und der ermittelten Referenzwerte zu bestimmen und ein dafür kennzeichnendes Ergebnissignal (R) bereitzustellen.

9. Kolorimetersystem (150) nach Anspruch 8, wobei die optische Vorrichtung (100) Anspruch 3 entspricht und die Konzentrationsbestimmungseinheit eine drahtlose Kommunikationseinheit aufweist, die ausgebildet ist, von der optischen Vorrichtung das drahtlose Kommunikationssignal gemäß dem vorgegebenen drahtlosen Kommunikationsprotokoll zu empfangen.

10. Verfahren (200) zum Betreiben einer optischen Vorrichtung (100) gemäß einem der Ansprüche 1 bis 7 zum Bestimmen eines optischen Parameters einer Probe, wobei das Verfahren umfasst:
- Emittieren von Licht (202) eines vorbestimmten Spektralbereichs mit variabler Lichtintensität;
- Steuern der Lichtintensität (204) in Abhängigkeit von empfangenen Steuerparametern;
- Erfassen von auftreffendem Licht (206), das dem emittierten Licht nach Wechselwirkung mit der Probe entspricht, an einer Lichtdetektionseinheit;
- Bereitstellen eines elektrischen Stroms (208) mit einer Strommenge, die von der Intensität des auftreffenden Lichts abhängt,
- Bereitstellen eines digitalen Werts (210) in Abhängigkeit von dem bereitgestellten elektrischen Strom,
- Steuern der Durchführung einer Zyklusmessung (212), die eine Referenzmessung und eine Probenmessung umfasst, wobei die Durchführung der Referenzmessung die folgenden Schritte umfasst:
- Empfangen (214) digitaler Referenzwerte in Abhängigkeit von der Strommenge, die von der Intensität des auf die Lichterfassungseinheit auftreffenden Lichts abhängt;
- Bestimmen und Bereitstellen (216) von Zielsteuerungsparametern, so dass der empfangene digitale Referenzwert einen vorgegebenen digitalen Zielwert erreicht;
- und die Durchführung der Probenmessung die Schritte umfasst:
- Bereitstellen der Zielsteuerungsparameter (218), die bei der Durchführung der Referenzmessung bestimmt wurden; und
- Empfangen von digitalen Probenwerten in Abhängigkeit von der Strommenge, die von der Lichtintensität des auf die Lichtdetektionseinheit auftreffenden Lichts abhängt, und Bereitstellen (220) eines dafür kennzeichnenden Ausgangssignals,
**dadurch gekennzeichnet, dass** das Verfahren weiterhin die Schritte umfasst, wenn die optische Vorrichtung die Referenzmessung durchführt und nachdem der empfangene digitale Referenzwert den vorbestimmten digitalen Zielwert erreicht hat:
- Überwachen (217a) der empfangenen digitalen Referenzwerte über eine vorbestimmte Zeitspanne;
- Bestimmen (217b) eines Abweichungstrends der während der vorbestimmten Zeitspanne empfangenen digitalen Referenzwerte gemäß einem vorbestimmten Bewertungsalgorithmus; und wobei
das Verfahren, wenn die optische Vorrichtung die Probenmessung durchführt, weiterhin den Schritt umfasst:
- Bestimmen (221) eines korrigierten digitalen Werts auf der Grundlage der empfangenen digitalen Probenwerte und des Abweichungstrends, und wobei das Ausgangssignal den korrigierten digitalen Wert anzeigt.

11. Verfahren nach Anspruch 10, das weiterhin den Schritt eines Bereitstellens des Ausgangssignals als ein drahtloses Kommunikationssignal gemäß einem vorbestimmten drahtlosen Kommunikationsprotokoll umfasst.

12. Verfahren (300) zum Betreiben eines Kolorimetersystems nach Anspruch 8 oder 9, wobei das Verfahren umfasst:
- Durchführen des Verfahrens (200) nach einem der Ansprüche 10 oder 11; wobei das Verfahren weiterhin die Schritte umfasst:
vor der Durchführung der Referenzmessung:
- Platzieren (302) einer Referenzprobe in einer Testkammer, so dass Licht von dem emittierten Licht auf die Referenzprobe gerichtet wird; und
nach der Durchführung der Referenzmessung und vor der Durchführung der Probenmessung:
- Platzieren (304) einer Testprobe, die die Referenzprobe und eine vorbestimmte Menge eines Testreagens umfasst, das mit der Substanz assoziiert ist, deren Konzentration in der Proben-Testkammer bestimmt werden soll, wobei das Verfahren (300) weiterhin umfasst:
- Empfangen (306) des Ausgangssignals (Os);
- Ermitteln (308) des vorbestimmten digitalen Zielwerts;
- Ermitteln (310) von Referenzwerten (RV), die mit mindestens einem optischen Parameter mindestens einer Substanz (S) verbunden sind; und
- Bestimmen (312) eines Konzentrationswerts der Substanz in der Probe auf der Grundlage des empfangenen Ausgangssignals, des vorbestimmten digitalen Zielwerts und der ermittelten Referenzwerte und Bereitstellen eines Ergebnissignals (R), das dies anzeigt.

13. Computerprogramm mit Anweisungen, die, wenn das Programm von einer optischen Vorrichtung (100) gemäß einem der Ansprüche 1 bis 7 ausgeführt wird, die optische Vorrichtung (100) dazu veranlasst, das Verfahren gemäß einem der Ansprüche 10 bis 12 auszuführen.

## Revendications

1. Dispositif optique (100) destiné à déterminer un paramètre optique d'un échantillon d'essai (101), le dispositif optique (100) comprenant:
- une unité d'éclairage (102) comprenant au moins un émetteur de lumière (104) configuré pour émettre de la lumière d'une plage spectrale prédéterminée avec une intensité lumineuse variable (I0), et une commande de lumière (106) qui est configurée pour recevoir des paramètres de commande (P) et pour commander l'intensité lumineuse (I0) en fonction des paramètres de commande (P) reçus;
- une unité de détection de lumière (108) agencée et configurée pour détecter de la lumière incidente (I1) provenant de l'unité d'éclairage (102) et pour fournir un courant électrique dont la quantité de courant (Ic) dépend de l'intensité (I1) de la lumière incidente;
- une unité de conversion (110) connectée à l'unité de détection de lumière (108) et configurée pour fournir des valeurs numériques (DR, DS) en fonction de la quantité de courant (Ic);
- une unité de traitement (112) connectée à l'unité de conversion (110) et à l'unité d'éclairage (102) et configurée pour commander la réalisation de cycles de mesure, chacun comprenant une mesure de référence pour mesurer un échantillon de référence et une mesure d'échantillon pour mesurer l'échantillon d'essai, et dans lequel, lorsque la mesure de référence est effectuée, l'unité de traitement est configurée:
- pour recevoir des valeurs numériques de référence (DR) de l'unité de conversion (110), en fonction de la quantité de courant (Ic) qui dépend de l'intensité lumineuse (I1) de la lumière incidente sur l'unité de détection de lumière (108);
- pour déterminer et fournir, à la commande de lumière (106), des paramètres de commande cibles (TP) de sorte que la valeur numérique de référence (DR) reçue atteigne une valeur numérique cible prédéterminée;
et dans lequel l'unité de traitement (112) est en outre configurée, lorsqu'elle effectue la mesure d'échantillon:
pour fournir, à la commande de lumière (106), les paramètres de commande cibles (TP) déterminés lorsque la mesure de référence est effectuée; et
- pour recevoir des valeurs numériques d'échantillon (DS) de l'unité de conversion (110), en fonction de la quantité de courant (Ic) qui dépend de l'intensité lumineuse (I1) de la lumière incidente sur l'unité de détection de lumière (108), et pour fournir un signal de sortie indicatif de celles-ci,
**caractérisé par le fait que**
lorsque le dispositif optique (100) effectue la mesure de référence, l'unité de traitement (112) est configurée en outre, après que la valeur numérique de référence (DR) reçue a atteint la valeur numérique cible prédéterminée,
- pour surveiller pendant une durée prédéterminée les valeurs numériques de référence (DR) reçues;
- pour déterminer une tendance de variation des valeurs numériques de référence (DR) reçues pendant la durée prédéterminée, selon un algorithme d'évaluation prédéterminé; et dans lequel
lorsque le dispositif optique (100) effectue la mesure d'échantillon, l'unité de traitement (112) est configurée en outre:
- pour déterminer une valeur numérique corrigée, sur la base des valeurs numériques d'échantillon (DS) reçues et de la tendance de variation, et dans lequel le signal de sortie est indicatif de la valeur numérique corrigée.

2. Dispositif optique selon la revendication 1, dans lequel l'unité de traitement comprend en outre une unité de communication sans fil (114) configurée pour fournir le signal de sortie en tant que signal de communication sans fil (Os) conformément à un protocole de communication sans fil prédéterminé.

3. Dispositif optique selon l'une quelconque des revendications précédentes, dans lequel l'unité d'éclairage comprend une pluralité d'émetteurs de lumière, chacun configuré pour émettre de la lumière dans une plage spectrale différente respective.

4. Dispositif optique selon la revendication 3, dans lequel l'unité de traitement est configurée pour faire fonctionner chacun de la pluralité d'émetteurs de lumière séquentiellement lorsqu'elle effectue la mesure de référence et lorsqu'elle effectue la mesure d'échantillon, de sorte qu'à un instant donné, un seul des émetteurs de lumière émette de la lumière.

5. Dispositif optique selon la revendication 3 ou 4, dans lequel l'unité de traitement est configurée, lorsqu'elle effectue la mesure de référence pour un émetteur de lumière respectif:
- pour recevoir des valeurs numériques de référence associées à l'émetteur de lumière respectif; et
- pour déterminer et fournir à la commande de lumière des paramètres de commande cibles respectifs pour commander l'émetteur de lumière respectif, de sorte qu'une valeur numérique de référence reçue associée à l'émetteur de lumière respectif atteigne une valeur numérique cible prédéterminée respective;
et dans lequel l'unité de traitement est configurée, lorsqu'elle effectue la mesure d'échantillon pour l'émetteur de lumière respectif:
- pour fournir les paramètres de commande cibles respectifs déterminés lorsqu'elle effectue la mesure de référence pour l'émetteur de lumière respectif;
- pour recevoir des valeurs numériques d'échantillon associées à l'émetteur de lumière respectif et pour fournir un signal de sortie respectif indicatif de celles-ci.

6. Dispositif optique selon l'une quelconque des revendications précédentes, dans lequel l'unité d'éclairage comprend au moins une diode électroluminescente, en particulier trois diodes électroluminescentes ayant des plages spectrales respectives dans une gamme spectrale rouge, une gamme spectrale verte et une gamme spectrale bleue.

7. Dispositif optique selon l'une quelconque des revendications précédentes, dans lequel l'unité de traitement est configurée, lors de sa mise sous tension, et pour mettre en oeuvre un processus d'étalonnage initial:
- pour recevoir des valeurs numériques de référence de l'unité de conversion;
- pour déterminer et fournir à la commande de lumière des paramètres de commande initiaux de sorte que la valeur numérique de référence reçue atteigne la valeur numérique cible prédéterminée.

8. Système colorimétrique (150) destiné à déterminer une valeur de concentration d'une substance (S) dans une solution, le système colorimétrique comprenant:
- un dispositif optique (100) selon l'une quelconque des revendications 1 à 7,
- une chambre d'essai (103) configurée pour recevoir un porte-échantillon (105); et
- une unité de détermination de concentration (116) qui est configurée:
- pour recevoir, de l'unité de traitement (112) du dispositif optique (100), le signal de sortie (Os);
- pour déterminer la valeur numérique cible prédéterminée;
- pour déterminer des valeurs de référence (RV) associées à au moins un paramètre optique d'au moins une substance (S); et
- pour déterminer une valeur de concentration de la substance dans l'échantillon sur la base du signal de sortie reçu, de la valeur numérique cible prédéterminée et des valeurs de référence déterminées, et pour fournir un signal de résultat (R) indicatif de celle-ci.

9. Système colorimétrique (150) selon la revendication 8, dans lequel le dispositif optique (100) est conforme à la revendication 3, et l'unité de détermination de concentration comprend une unité de communication sans fil configurée pour recevoir du dispositif optique le signal de communication sans fil conformément au protocole de communication sans fil prédéterminé.

10. Procédé (200) destiné à faire fonctionner un dispositif optique (100) selon l'une quelconque des revendications 1 à 7 pour déterminer un paramètre optique d'un échantillon, le procédé comprenant:
- émettre de la lumière (202) d'une plage spectrale prédéterminée avec une intensité lumineuse variable;
- commander l'intensité lumineuse (204) en fonction de paramètres de commande reçus;
- détecter, au niveau d'une unité de détection de lumière, de la lumière incidente (206) qui correspond à la lumière émise après interaction avec l'échantillon;
- fournir un courant électrique (208) dont la quantité de courant dépend de l'intensité de la lumière incidente,
- fournir une valeur numérique (210) en fonction du courant électrique fourni,
- commander la réalisation d'une mesure cyclique (212) comprenant une mesure de référence et une mesure d'échantillon, dans lequel la réalisation de la mesure de référence comprend les étapes consistant à:
- recevoir (214) des valeurs numériques de référence en fonction de la quantité de courant qui dépend de l'intensité de la lumière incidente sur l'unité de détection de lumière;
- déterminer et fournir (216) des paramètres de commande cibles de sorte que la valeur numérique de référence reçue atteigne une valeur numérique cible prédéterminée;
- et la réalisation de la mesure d'échantillon comprend les étapes consistant à:
- fournir les paramètres de commande cibles (218) déterminés lors de la réalisation de la mesure de référence; et
- recevoir des valeurs numériques d'échantillon en fonction de la quantité de courant qui dépend de l'intensité lumineuse de la lumière incidente sur l'unité de détection de lumière, et fournir (220) un signal de sortie indicatif de celles-ci,
**caractérisé par le fait que** le procédé comprend en outre, lorsque le dispositif optique effectue la mesure de référence et après que la valeur numérique de référence reçue a atteint la valeur numérique cible prédéterminée, les étapes consistant à:
- surveiller (217a) pendant une durée prédéterminée les valeurs numériques de référence reçues;
- déterminer (217b) une tendance de variation des valeurs numériques de référence reçues pendant la durée prédéterminée, selon un algorithme d'évaluation prédéterminé; et dans lequel
lorsque le dispositif optique effectue la mesure d'échantillon, le procédé comprend en outre l'étape consistant à:
- déterminer (221) une valeur numérique corrigée sur la base des valeurs numériques d'échantillon reçues et de la tendance de variation, et dans lequel le signal de sortie est indicatif de la valeur numérique corrigée.

11. Procédé selon la revendication 10, comprenant en outre l'étape consistant à fournir le signal de sortie en tant que de signal de communication sans fil conformément à un protocole de communication sans fil prédéterminé.

12. Procédé (300) destiné à faire fonctionner un système colorimétrique selon la revendication 8 ou 9, le procédé comprenant:
- mettre en œuvre le procédé (200) selon l'une quelconque des revendications 10 ou 11, dans lequel le procédé comprend en outre les étapes consistant à:
avant d'effectuer la mesure de référence:
- placer (302) un échantillon de référence dans une chambre d'essai de manière à ce que de la lumière de la lumière émise soit dirigée vers l'échantillon de référence; et
après avoir effectué la mesure de référence et avant d'effectuer la mesure d'échantillon:
- placer (304) un échantillon d'essai comprenant l'échantillon de référence et une quantité prédéterminée d'un réactif d'essai associé à la substance dont la concentration doit être déterminée dans la chambre d'essai d'échantillon, dans lequel le procédé (300) comprend en outre:
- recevoir (306) le signal de sortie (Os);
- déterminer (308) la valeur numérique cible prédéterminée;
- déterminer (310) des valeurs de référence (RV) associées à au moins un paramètre optique d'au moins une substance (S); et
- déterminer (312) une valeur de concentration de la substance dans l'échantillon sur la base du signal de sortie reçu, de la valeur numérique cible prédéterminée et des valeurs de référence déterminées, et fournir un signal de résultat (R) indicatif de celle-ci.

13. Programme informatique comprenant des instructions qui, lorsque le programme est exécuté par un dispositif optique (100) selon l'une quelconque des revendications 1 à 7, amènent le dispositif optique (100) à mettre en œuvre le procédé selon l'une quelconque des revendications 10 à 12.
